(19) Europäisches Patentamt
European Patent Office
Office européen des brevets

(11) **EP 2 546 786 A1**

(12) **EUROPEAN PATENT APPLICATION**

(43) Date of publication:
**16.01.2013 Bulletin 2013/03**

(51) Int Cl.:
***G06N 5/02*** *(2006.01)*

(21) Application number: **11075169.0**

(22) Date of filing: **15.07.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Universitat de Barcelona Hospital Clinic**
**08028 Barcelona (ES)**

(72) Inventors:
• **Llobera, Joan**
  **08328 Alella( Barcelona) (ES)**
• **Slater, Melvyn**
  **08015 Barcelona (ES)**

(74) Representative: **Torner Lasalle, Elisabet**
**Torner, Juncosa I Associats, S.L.**
**C/Gran Via de les Corts Catalanes, 669 bis 1r 2a**
**08013 Barcelona (ES)**

(54) **A method for automated decision making**

(57)     The method comprises using situated agents with real time reactivity skills for making decisions according to their individual perceptions and motivations, and further comprises integrating into the situated agents one or more pre-established plans by means of a model representing sequences of causally related events for supporting said decision making to fulfil coordinately said one or more pre-established plans.

**Figure 2**

Printed by Jouve, 75001 PARIS (FR)

**Description**

Field of the art

The present invention generally relates to a method for automated decision making, comprising using situated agents for decision making, and more particularly to a method which integrates one or more plans within the decision procedure of situated agents, so the coordinated action of one or several agents satisfies the plan or plans.

The innovation consists in a method to represent one or several sequences of causally related events and to use such representation to support automated decision making within complex environments. The method is intended to give the best of the two main approaches in AI: agents with real time reactivity skills as in behaviour-based AI combined with skills to satisfy plans as in classical AI. It is therefore a method for the fulfilment or discovery of plans by situated agents.

Prior State of the Art

The aim of Artificial Intelligence (AI) is building artificial agents that can perceive, decide and behave in a way that looks intelligent to us. In such aim, the decision method is a critical step for which it is important to have a good representation of the external environment and/or the internal state of the agent.

There have been 2 main streams in AI: symbolic and sub-symbolic approaches. Early artificial intelligence (AI) focused on building artificial agents with skills for solving formal problems, most often based on operating logical rules over symbolic knowledge. The problems at stake involved algebraic constructions and the solutions found were formal and analytic. This is often an approached used, for example, for chess playing agents: the challenge is to generate a good representation that allows stating a large amount of solutions and evaluate their convenience.

A parallel stream of work involved the so-called sub-symbolic processing. Techniques such as control theory, neural networks, and Bayesian systems were used to represent knowledge in a much more distributed way: there was no variable representing a concrete proposition, but rather a system that learnt from examples to give a correct answer. Nowadays, all such techniques are widely used for industrial applications. They can also be compared in a common statistical framework based on success ratios.

In the 70s, expert system representation used fuzzy values within formal constructions to represent symbolic knowledge more subtly. In particular, possibility theory was proposed as an alternative to probability theory to represent uncertainty in a more nuanced way. Instead of representing an uncertain knowledge with a probability (example: the table is green with probability 0.8), they represented with possibility and necessity values (example: the table is green with possibility 1.0, and given it is not possibly yellow nor pink nor blue it is green with necessity 0.8). The aim of such kind of fuzzy representations would lead to decision processes more consistent with human reasoning and decision. Nowadays, fuzzy logic is still used to combine the output of several expert systems which would give information partially redundant. This problem is still not solved satisfactorily and techniques to do so are eventually patented.

All the previous techniques work on problems that are "well defined", this is, when the context of application is reasonably constant. For example, to train a neural network it is necessary to have a corpus of data obtained in the same context that the final application will have. If the context changes, the training is no longer valid, and the decision system will not perform as well as expected. Even more, logic based systems need to know all the possible events or perceptions that can occur in order to assign them a symbol and in addition the logical rules relating the symbols have to capture at some extent the relations among the elements they represent. Otherwise, the decision system will not give a good answer.

For example, controlling a robot in a car factory with these techniques needs the robot to be set and trained in a static framework. Such robot can use sub-symbolic processes to detect the exact location where to use a screwer, but if instead of a car piece it receives a human it is likely the system screws the human instead of the car. Such systems are very good at following a pre-established static plan in which to behave but they cannot react to an environment changing in real time.

A more common day example: inkjet printers use such sub-symbolic techniques to adjust the precise alignment of paper sheets from the input obtained from sensors. The decision technique is simply used to decide whether it should move the paper to the left or to the right. The plan of printing a sheet is a fixed sequence established a priori. Therefore, if the paper is not of the kind planned, for example it is too thick, the sub-symbolic techniques will help aligning the paper, but the fixed plan will make the printer malfunction.

Later on, during the 80 and 90, a new approach to AI appeared: situated agents. The reason is simple: many real-life problems do not give such a static context, and therefore decision problems moved to complex environments: environments changing in real time in a nonlinear fashion. Situated agents are those exposed to a rapidly changing environment which asks for decisions that take into account real time updated perceptions. Such environments can be physical such as a room, or virtual such as a website. How can such agents be designed?

The influence of cognitive sciences, where the idea of embodied cognition was increasingly embraced, suggested that such problems could be addressed better with architectures that where distributed -just as the brain is- with many specialized modules contributing cooperatively to make decisions. The adoption of such architecture in AI created Behaviour-Based Artificial Agents. Classical AI understands knowledge as symbolic, with several layers of representation -perception, belief, plan, decision, etc.- which are often linked hierarchically. In Behaviour-Based Artificial Agents, each of many modules contributes to the whole decision of performing one or several actions.

Some of such architectures for situated agents have been patented. For example, US20080208544 proposes a method to generate decision systems based on a particular representation of perceptions, motivations and opportunities within a decisional tree.

*Behaviour Networks:*

Another decisional architecture proposed for situated agents is Behaviour Networks. It was first proposed in Maes, P. 1991. In this approach, an agent is constituted of several modules. Each module can trigger the behaviours, do the reasoning, establish the beliefs and the representations in such a way that the "module society" guarantees the agent's functions on a cooperative basis. These modules can be organized in groups according to at what extent they are incompatible in their co-execution. They can also form "macro-modules", which are formed by a large set of modules co-activated, forming cyclic or acyclic graphs of activation spreading. Behaviour Networks share some similarities with artificial recurrent neural networks, but have the advantage of allowing for the declarative instantiation of the competence modules, the goals and their relations, instead of "wiring" arbitrarily the different modules of a neural network. It is a form of having knowledge without representation, in the sense there is no place where knowledge is formally declared: when programming a behaviour network it is never said "this world is like this and like that", but rather the agent is told "do this in this situation". How to determine a particular situation is done by other competence modules in a similar way: "if this and this is detected then believe this".

Extended Behaviour Networks (EBN), as introduced by Dorer, K. 2004, is an extension of the architecture proposed in Dorer, K. 1999. In such, agents have multiple situation-dependent goals, and the actions performed are selected with the expectation of goal achievement, and also with relevance measures.

EBN presents the advantage that the different modules can be concurrent, this is, processed separately, that the decisional method always converges and parallel action selection works well. Recently, extension or modifications of it have proved to be able to model the impact of affect and emotion in how decisions are taken within this network (Johansson, A., & Dell' Acqua, P. 2009), or the psychological realism of decisions (Dorer, K. 2010).

Another advantage is that the way how the different elements of the situation should be weighted can be learnt using adaptive learning techniques. In fact, the architecture was originally designed by Pattie Maes to mix representational, belief, planning and action triggering levels indistinctly in competence modules, and having learning as a central element. Learning from training is still possible but contrary to Bayesian or neural networks its declarative nature grants it is still easy to understand what each module does after the learning process.

It has largely been demonstrated that such architectures perform well in a complex and real-time environment such as the RoboCup competition, where robots have to play a football match. In such environments, each of the robots forming a team is an autonomous entity deciding and performing actions on its own.

Contrary to classical AI, Behaviour-Based AI approaches perform well in complex domains. However, its modular nature prevents them from satisfying goals which require plans, i. e., sequences of events causally related. This has probably been one of the main reasons such approaches have been adopted for applications such as videogames, but not for industrial manufacture.

In the previous car factory example, adopting the situated view would allow giving away the linear production pipeline. A behaviour based agent would detect the opportunity to put a screw in a place when perceived, but there would be no way of granting that several robots with different skills would end up building a car in the right structure as the end result. For a football match, there would be no way to coordinate the behaviour of the agents to grant a certain result occurs.

Currently, there is no way to represent a plan in such a way that it is performed by several situated agents in a complex environment that would grant that each agent decides individually what to do taking into account real time updated perceptions and motivations, but whose global end result can be predefined. This is because in the state of the art there is no method to represent sequences of causally related events to be performed by situated agents.

If such kind of plans existed, several agents taking decisions on their own could reach to build sophisticated structures. In the car factory example, such kind of agents could start with all the pieces of the car placed randomly, but they would be able to coordinate their work to end up with the car built. This is because they would have a plan of what building a car is embedded within their distributed decision architecture, perceive what the other agents do and contribute to the global plan on a constructive basis.

A natural equivalent of such process of distributed but coordinated decision processes is morphogenesis. During morphogenesis, given a certain biochemical environment, each cell decides by itself whether to reproduce or not, but the overall result is a tissue or even an organism with a coherent structure. However, there is no place in the cell where such "tissue" is preprogrammed: it is simply the result of tightly imbricated sequences of causally related events distributed all around its metabolism.

Description of the Invention

It is necessary to offer an alternative to the state of the art which covers the gaps found therein, particularly those related to the lack of proposals providing one or several situated agents not only acting from the current situation but also coordinating their actions to fulfil one or more preestablished plans.

To that end, the present invention provides a method for automated decision making, comprising using one or more situated agents with perceptions and real time reactivity skills for making decisions according to their individual perceptions and motivations.

On contrary to the known methods, the method of the invention further comprises, in a characteristic manner, integrating into said situated agents one or more pre-established plans by means of a model representing sequences of causally related events for supporting said decision making to fulfil coordinately said one or more pre-established plans.

For an embodiment, said model associates a possibility and a necessity value to at least part of said events.

The method of the invention comprises building said model, as per an embodiment, for determining the possibility, necessity and probability of said events, by means of performing the following steps:

a) stating or discovering events which are internal and/or external to a causal sequence and temporal precedence relations among them;
b) establishing or discovering relations between the possibility and necessity values of the events from said temporal precedence relations and kinds of events, including if they are internal or external; and
c) quantifying the temporal latencies within said order relations.

Said internal event is one whose occurrence is conditioned by events having started previously within the causal sequence, and said external event is one that could possibly occur within a sequence of events, and even condition the occurrence of other internal events, but whose possibility of occurrence is not conditioned and must, therefore, be estimated by an external method. Said statement or discovery of events of step a) comprises, for an embodiment, stating one or more immediate predecessors for each event, and stating that the start of an event must be posterior to the start of his immediate predecessor or predecessors, and hence state that each event presents order relations forming a lattice with his immediate and non-immediate predecessors.

According to an embodiment, said step b) comprises determining the possibility and necessity values of each internal event as a function of:

-    its cause, wherein said cause is one preceding event, unique or out of several candidates, regarding possibility and/or necessity values and/or occurrence, and/or
-    its context, wherein said context is one or several of the said immediate and non-immediate predecessors.

The method of the invention comprises, according to an embodiment, updating at run time the possibility and necessity values of each of the events from temporal latencies established beforehand and/or information obtained at run time by a physical model or any other external source.

As per an embodiment, the method of the invention comprises transforming the specification of events resulting from steps a), b) and/or c) and integrating it into a physical system constituting one or more said situated agents.

Regarding said physical system, it is an information processing device selected, depending on the embodiment, from one of an electric (analogue) and/or electronic (digital) processor and/or a biological processing device, such as a neural culture.

For an embodiment said electric and/or electronic processor implements simulations of a biological physical system (such as computational simulations), for example in the form of a neuromorphic system implementing models of neural systems.

For at least some embodiments, said situated agent makes said decisions using said real time reactivity skills according to a behaviour-based network or an extended behaviour-based network, or EBN.

The method comprises, as per an embodiment, to embed said specification of events into at least part of said situated agents without overwriting the skills previously embedded, informing the situated agent that each event can:

-    be executed by any agent with access to the needed resources and/or
-    be used as the cause or part of the context of another event and/or
-    be estimated with some estimation method

It is envisaged by the method of the invention to use learning mechanisms in order to improve its results. With that purpose, the method of the invention comprises, for an embodiment, building candidate sequences of events by performing steps a), b) and/or c) from real time perceptions and/or previously established or declared sequences of events

For another embodiment, the method comprises integrating statistical learning methods (such as Bayesian learning, reinforcement learning or biological mechanisms of statistical adaptation such as long term potentiation or long term depression) within at least part of said situated agents, for adjusting events relations within sequences of events, whether they are said candidate sequences or the ones previously established.

As per an embodiment, the method comprises ranging and selecting said candidate sequence or sequences of events by dynamically evaluating them.

Brief Description of the Drawings

The previous and other advantages and features will be more fully understood from the following detailed description of embodiments, with reference to the attached drawings, which must be considered in an illustrative and non-limiting manner, in which:

Figure 1 shows how, according to the method of the invention, for each event, its occurrence in time is bounded by two values, a possibility and a necessity. These values also allow the definition of the past, present and future of that event.

Figure 2 shows, at left, the three sequences represented in three Hasse diagrams, for an embodiment of the method of the invention, and, at right, a Hasse diagram showing a partial order combining the order information obtained from the combination of the three sequences.

Figure 3 shows a schematic view of an agent in Extended Behaviour Networks, according to a conventional EBN method.

Figure 4 shows, by means of a visual diagram, how, for each event in an interactive story, a minimum and a maximum latency would be established, as per the method of the invention, in a way similar to how a movie is edited.

Detailed Description of Several Embodiments

In the present section the three steps constituting the method of the invention for several embodiments are introduced in detail. For each, the algorithmic mechanism is described, as well as how it would be implemented in three examples of application.

The first application is for the fabrication of a product with distributed situated agents. In this case, such representation can be used as a shared used to coordinate the actions of one or several agents. Such agents can be artificial agents -for example, an agent equipped with an Extended Behaviour Network (Dorer, K. 2004) (EBN) fabricating a classical industrial product such as a car.

But such planning skills in situated agents can also be biologic agents. As a second example a culture of neural cells triggering the liberation of specific chemicals to modulate biochemical processes is proposed.

A third application can be developed in the context of interactive storytelling. In this case, such representation is used to define and drive cooperative interaction between artificial agents and humans to tell a story in an interactive environment. The challenge in this case is that not only the artificial agents need to process the plan appropriately, but also the human participants must understand the result unambiguously.

Finally, such method can also be used for learning, such as for the discovery of causal relations. In this case, an agent exposed to environments with similar events discovers patterns between its actions and the reactions of the environment will progressively predict better the behaviour of the environment and how it will react to its actions, something that ultimately contributes to improve its decision processes. This method is complementary to statistical learning techniques such as reinforcement learning to learn to perform from examples of such actions. An application scenario involving the development of skills to do complex movements by robots taking on the example of coordinated behaviour controlled with an EBN is also proposed and described.

The present description introduces some basic definitions, and then describes each step and what it implies for each application scenario. A separate section reviews the 3 steps in the learning scenario.

Basic definitions

The method is based on a generalization of possibility logic to apply not only to perceptions, but also to events in general. To each event e two values are therefore associated: a possibility value $pos(e)$ and a necessity value $nec(e)$. Note these values do not have exactly the same meaning than in possibility theory. The intuitive meaning of such values is to relate them with temporal regions relative to the occurrence of the event.

In addition, an event is considered to be internal or external. An internal event is one that will necessarily occur from the previous or simultaneous events within the causal sequence, with a particular latency relative to a cause that can be internal or external. An external event is one that could possible occur within a sequence of events, and even have consequences, but whose occurrence must be estimated by an external method such as a dedicated sensor or classifier (It is also possible to consider that the estimator of an external event fixes the necessity value. In this case the possibility can be always 1, or fixed by a set of previous events that we call a 'context'. In this case, the definition of the logical operators such as implication has to be changed consistently, but no major differences appear).

The way the probability of each event is determined involves the 3 aforementioned steps.

Step 1: event statement

This step states (or discovers) the events. To declare events a label or proposition is associated with them. Events are separated with a point (.). An external event will be preceded by an IF and followed by a THEN. It is also possible to combine several external events with logical operators such as AND, OR or NOT. It is also possible to consider a jump forward in the sequence of events as a consequence of an external event, such as IF a THEN GO TO f.

Obviously this syntax can be enriched, but it is already sufficient to state a plan. The only assumption done in the first step is that a point (.) or any other operator used implies a weak order relation: the temporal beginning of the event stated first should be previous or simultaneous to the temporal beginning of the second event ($e1 \leq e2$). For example, in a plan such as:

*Explorer Robot searches the bomb. Explorer Robot localizes the bomb. Bomber Robot deactivates the bomb. Explorer Robot reports progress in the deactivation of the bomb.*

The last proposition can start at the same time than the immediately previous, or much later. This will be established in subsequent steps.

Note this step does not state what particular agent does the action involved in performing the event. For example, there could be several agents of the kind "Explorer Robot". This will turn to be an important feature for coordinated action.

A particular case that has to be considered is when external and internal events are combined. In this case, the predecessor of an internal event should be the immediately previous internal event stated. The reason for this is simple: it might be possible to estimate the occurrence of an external event can be estimated but not its time occurrence. Moreover, it might not even occur. Therefore, it is not reliable to link the occurrence of an internal event to an external one. Consider that in the previous example, because of the particularities of the problem, the localization of the bomb is possible but not certain. If the bomb were not localized, the subsequent steps in the plan would never come to be considered. In such case it would be preferable to state such a plan like:

*Explorer Robot searches the bomb.*
*IF Explorer Robot localizes the bomb THEN Bomber Robot deactivates the bomb.*
*Explorer Robot reports progress in the deactivation of the bomb.*

A possible solution to this problem is to assume in the order relation ($\leq$) the first element must always be internal. Following such rule, in the previous example the occurrence of the last event is relative to immediately previous internal one, which is the first stated. Therefore, at this point it would be possible that Robot A reports progress simultaneously while he is searching, or afterwards (this detail will only be defined in the 2 subsequent steps). However, in the plan statement where all events were internal, the last event would start at the same time or later than the immediately preceding one, this is, when the bomb was deactivated.

Note there are alternative solutions. For example, one could impose that all the external events must be complemented. This implies a structure similar to:

a.

IF b THEN c

IF NOT b THEN d

e.

If external events are complemented, it is still possible to consider the whole block of external events as a reference in the temporal orders.

Step 1 in application scenarios

The application of this step to the different application scenarios described is quite straightforward. Concerning the fabrication of a product such as a car, the plan should describe the logical order of the temporal processes involved. For example, it is possible that the windows should be added only when the painting is finished. However, this would be independent of assembling the parts of a wheel. In this case, two separated plans would be stated (the relation among them would be stated later). Therefore, the result of this step for a complex task such as a car construction would be the statement of a large set of plans. For a product involving biochemical processes it would be exactly the same.

Concerning the interactive story, a stated plan would be a story script (the interactivity is defined in the following steps). Note the similarity of the previous examples with a movie script is quite obvious.

Step 2: lattice establishment and quantification

Second step establishes (or discovers) the order relations among the events, which can be represented in the form of a lattice. Then, this lattice is used to establish quantitative relations between the possibility and necessity values of the events in the lattice.

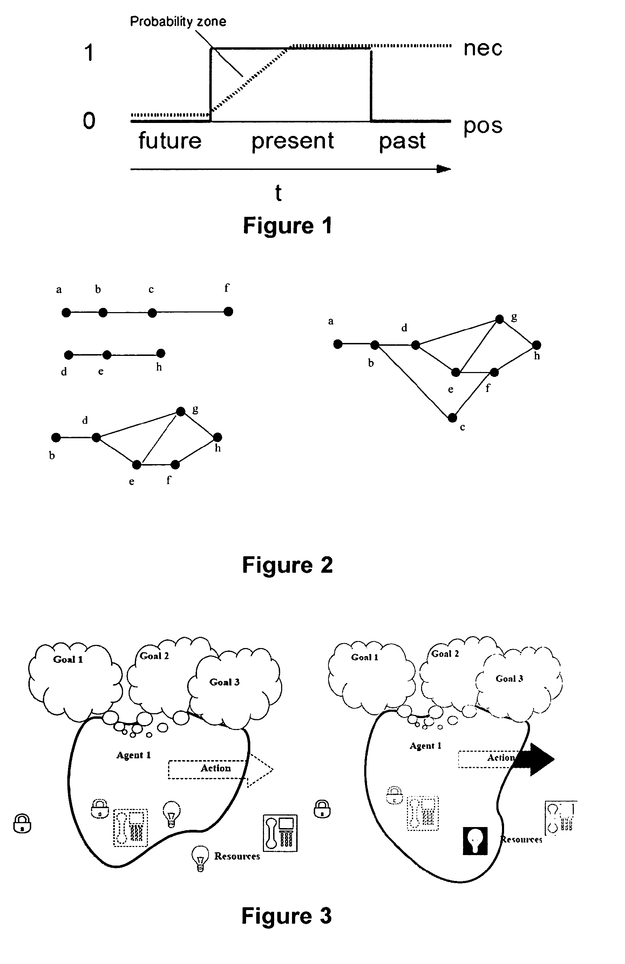

At this point, it is useful to introduce some definitions. For each internal event temporal regions are defined (see Figure 1 for a graphical representation):

- $future(e)$ is $[nec(e) = 0]$ AND $[0 \leq pos(e) \leq 1]$. The probability of occurrence is null.
- $present(e)$ is $[pos(e) = 1]$ AND $[0 \leq nec(e) \leq 1]$. The probability of occurrence is bounded among these two values.
- $past(e)$ is $[pos(e) = 0]$ AND $[0 \leq nec(e) \leq 1]$. In this case probability is undefined.

Note in the last 2 cases the event is considered a *fact* with a certainty of $nec(e)$.

However, this definition is not possible for external events. Later we'll show the necessity of an event is determined by its cause, and by definition external events do not have a cause (or, at least, within that sequence of events). Therefore, an external event will have a null necessity, and only a possibility value estimated from information obtained with a dedicated sensor or classifier.

To relate these values, logical operators are defined. As such operations were initially defined to relate sentences in the domain of a conversation, these are considered a 'Language Logic' or, in short, Llogic operators. They are defined as:

- **AND** ($\wedge$) is defined on the *necessity* domain, such as $nec(a \wedge b) \overset{\Delta}{=} min(nec(a), nec(b))$.

- **OR** ($\vee$) is defined on the *possibility* domain, such as $pos(a \vee b) \overset{\Delta}{=} max(pos(a), pos(b))$.

- **IF x THEN** $y(x \Rightarrow y)$: Implication transfers values from the possibility domain to the necessity domain, and it assumes that the given consequence is possible. Therefore, assuming $[pos(y) := 1]$, $x \Rightarrow y \overset{\Delta}{=} nec(y) := pos(x).$

In the previous definition the sign ':=' means assign value on the right to variable on the left, like in any standard programming language.

Other operations can also be defined. For example, if one considers that external events must always be complemented, it is useful to consider a NOTP operator such as:

- NOPT ($\neg$) The negation operator has the particularity of being multi-valued.

  $pos(\neg(a,b,c)) \overset{\Delta}{=} 1 - max(pos(a), pos(b), pos(c))$. In particular, combined with implication it gives: $(\neg(a,b,c) \Rightarrow d) \equiv (nec(d) := 1 - pos(a \vee b \vee c))$.

It should be stressed that because of the previous step, these operators are not commutative. This can be seen intuitively: the 2 propositions "He gets angry AND she cries" do not imply the same than "She cries AND he gets angry". The causal relations suggested by these sentences are not the same, and they do not suggest the same meaning. Therefore, quantifying the occurrence of 1 of these sequences does not say anything about the occurrence of the other.

With these *Llogic* operators the possibility and necessity values of an event can be determined by previous events. In particular, for a sequence of events, if it is considered the beginning of the sequence as an event 'K', the context of an event can be defined as what makes it possible (note if it is considered that the possibility of external events has to be estimated this definition does not apply for external events):

- The **context** $p^*$ of a proposition $p$ is a chain such as $p^* \equiv K \wedge p_1 \wedge p_2 \wedge ... \wedge p_n$

The context fixes the possibility value, with the formula: pos(p):= nec(p*). This implies that in order p has a possibility value of 1, all the elements of its context must have a necessity of 1 (this definition will change if it is decided to consider that external events have a necessity value and can be part of the context of events. However, in practical terms the context will still have the same role).

Reciprocally, the cause of an event is what determines its necessity:

- Reciprocally, the **cause** $p^{**}$ is one event among a set of possible events $p^{**} \equiv p_1 \vee p_2 \vee ... \wedge p_n$, and it is what forces the event to occur by fixing its necessity value: $nec(p) := pos(p_1 \vee ... \vee p_n)$. The actual cause is a single element: it is just one among some elements that can trigger a certain action or associate a belief to a certain action. It also satisfies $t_{p^{**}} \leq t_p$.

Note this definition of cause is independent of whether the cause is an internal or external event. If the cause of an event is one of the previous internal events, the necessity will end up being 1. On the contrary, if the cause is external it will have to be estimated. For example in IF $x_1$ THEN $y_1$ to know when to trigger $y_1$ a way to estimate the occurrence of $x_1$ is necessarily needed

Step 2 in application scenarios

This step is systematic for all the application scenarios. It consists in assigning a context and a cause to all the internal events, and an estimator for all the external ones.

For an application such as an interactive story, it is possible that there is only 1 chain. In simple chains such as:

a.b.c.d

there would only be taken from the previous elements: the cause which is the immediately preceding internal event, and the context which are all the previous internal events. In this example, the context of 'd' is 'K ^ a ^ b', and its cause is 'c'. For the first event, the cause is simply 'K'.

However, when addressing more complicated scenarios, such as several intertwined processes involved in a car fabrication, or sets of cascading chemical reactions, it can rapidly become more complicated. In this case, it is useful to build a particular kind of visual diagram named Hasse diagrams.

For example, imagine that in the process of fabrication a product fabrication there are 3 sequences of events (S1, S2, S3) involved. They are declared as:

S1: a.b.c.f.
S2: b. d.e.h
S3:
b.d. IF e THEN f
IF NOT(e) THEN g.
h.

It is hard to see the temporal constraints imposed by these sequences interacting. However, it can easily be visualized with a schema as in Figure 2. Note these visual schemas can be generated automatically, and it is always possible to join 2 sequences in a bigger sequence. It is also possible to build the context and the cause of an event from the bigger sequence (assuming it is still known which events are internal or external).

Note there are alternative solutions for this step. For example, it is possible to consider that estimating an external event does not fix its possibility but rather its necessity value. In this case, for external events the cause relation does not transfer from the possibility of the cause to necessity of the consequence, but rather from the necessity of the first to the necessity of the second. However, in practical terms the behaviour of the physical system would remain unchanged.

Step 3: physical embodiment

The third step involves transforming the specification of events resulting from step 2 into a situated agent, and integrating it seamlessly with preexisting skills in the agent.

How to do such process for 2 different kinds of agents is shown. First is an EBN agent, which can ultimately be embedded in a software agent such as a virtual character or in a physical agent such as a robot. A second kind of agent is a biologic agent, such as a cultivated biological neural network, or a biologically realistic computational simulation of such. In principle, other physical embodiments would also be possible. Possible advantages of the 2 embodiments proposed are that in such decisional architectures skills can be encapsulated in functional modules, which allows for massively parallel processing, and agents with such systems can perform coordinated behaviour.

An embodiment within an EBN will be reviewed in detail, and outline how a similar process would be done within a biologically plausible neural network.

Therefore, it is first introduced the definition, decisional procedure and syntax of an EBN, to then show how our representation can be embedded within it.

Figure 3 shows a schematic view of an agent in Extended Behaviour Networks, according to the method of a conventional EBN.

It has several goals and can use resources to perform actions if they are within the domain of his competence modules. In this case, to perform a certain action needing a certain resource, a module would block the availability of the resource (in dark grey). Such an action would only be selected if it was expected that its effects contribute to some goal evaluated to be relevant and important, and if it didn't collide with other modules associated with other goals of higher importance or relevance.

The essential modification the invention introduces in this schema is to consider that actions performed by an agent can be used as resources by the same or another agent.

Detailed description of an Extended Behaviour Network

*EBN definition:*

To define an EBN more precisely, consider a behaviour network is a set of Goals, Competence Modules and Parameters such as $\{G, M, \Pi\}$. The extended version, in addition to the competence modules and the goals also has resources, which can be material such as a part of the body, or an arm, or immaterial, such as a previous perception driving to some acquired knowledge, as for example the knowledge of football players that know the ball is in some place although not seeing it. Therefore, an extended behaviour network is such as $\{G, M, U, \Pi\}$, where, following Dorer's notation:

A Goal is a tuple (GCon, i, Rcon) such as:

- GCon is the goal condition, and it is a conjunction of propositions (it has $\wedge, \neg$)
- $i \in [0..1]$ is the static importance of the goal
- RCon is the relevance condition, the situation dependent dynamic importance of the goal, made of a conjunction and disjunction of propositions (it has $\wedge, \vee, \neg$)

A Competence Module is a tuple such as (Pre, b, Post, Res, a) with:

- Pre is the precondition, with $e = {}_\top P(\text{Pre}, s)$ the executability, this is, fuzzy truth value of the precondition in situation s.
- b is the behaviour performed once the module is selected for execution.
- Post is a set of tuples (Eff,ex), where Eff is a proposition describing an expected effect, and ex = P(Eff/Pre) is the probability of achieving the effect given a certain precondition (and therefore execution of b).

Res is a set of resources res $\in$ R. $_\top U$ (k, res, s) is the situation-dependent amount of resource units expected to be used in behaviour b.

- $a \in R$ is the activation of the competence module, and it represents an expected utility of a behaviour according to certain goals. This is what evaluates the relevance condition described earlier.

The Parameters are such as:

- $\gamma \in [0..1]$ is the activation of competence modules
- $\delta \in [0..1]$ is the inhibition of competence modules
- $\beta \in [0..1]$ is the inertia, this is, the influence of activation across different cycles
- $\theta \in [0..\hat{a}]$ is the activation threshold a module has to exceed to be selected for execution. $\Delta\theta \in [0..\theta]$ is the threshold decay for one step.

*EBN decisional procedure*

In EBN there is another parameter introduced, which is:
• $\theta_{res} \in [0..\theta]$, which is the threshold to use a certain resource.

The activation of a certain competence module k is related with its inertia:

$$a_k^t = \beta a_k^{t-1} + \sum_i a_{kg_i}^t$$

The external contribution to this value $a_{kg_i}^t$ is the biggest of these terms:

$$max(\gamma f(i_{g_i}, r_{g_i}^t)ex_j, -\delta f(i_{g_i}, r_{g_i}^t)ex_j, a_{kg_i}^t{}^3, a_{kg_i}^t{}^4)$$

In the previous equation the first two terms take into account the effect or conflict with the j successor goals, and the other two accounts for inertia terms related with this effect. The expected effect can be of the module itself or of a successor module.

In EBN, the decisional procedure is such as, for each module, the machine must:

1. Calculate the activation 'a' and the executability 'e' of the module
2. Calculate the execution-value 'h(a, e)', which can be eventually a non-monotonic function, but also simply the product.
3. For each resource res used by module k starting with the previous unavailable resource:

(a) check if the execution value exceeds the activation threshold of the resource res, this is $h(a, e) \geq \theta_{res}$
(b) Check if the amount of resource units still available are enough, this is, if: $T_U \leq T_R(res, s)$. If so, bind the resources, i.e., increase the number of used units by the expected number of units the behaviour will use.

4. If both tests succeeded,

(a) Execute the corresponding behaviour
(b) Reset the activation threshold of all the resources used, i. e., reduce the amount of bound resource and start again

5. Otherwise, reduce $\theta$ by $\Delta\theta$ and start again.

EBN syntax:

To show how the rules that define the decisional architecture are declared, samples of the configuration file used in Dorer, K. 2004 are here used. Goals are declared as:

| 1 | | |
|---|---|---|
| | GOAL ballIsNearOwnGoal | *//A new goal and its relevance condition* |
| 3 | THEN noOtherGoal 0.9 | *//The goal condition and its importance* |
| 5 | GOAL inOtherHalf | *//Another goal with identical syntax* |
| | THEN NOT inOffside 0.6 | |

A module is declared as:

| 2 | MODULE | *//A new module* |
|---|---|---|
| | IF haveSeenBall | *//A precondition* |

(continued)

|    |                          |                                                    |
|----|--------------------------|----------------------------------------------------|
| 4  | AND NOT ballKickable     | //Other preconditions                              |
|    | AND NOT teammateIsNearerBall | //...                                          |
| 6  | AND haveEnoughStamina    |                                                    |
|    | THEN run To Ball         | //The action to perform                            |
| 8  | EFFECT haveBall 0.5      | //An expected effect and its expected probability  |
|    | AND ballKickable 0.4     | //Other effects                                    |
| 10 | AND lowStamina 0.3       |                                                    |
|    | USING leg 1              | //A resource and the amount expected to be needed  |

The result of such declaration is a rule file with a list of goals and competence modules with combinations of conditions, resources, actions and numbers with different meanings. To declare such rules, all the conditions have to be mapped to a function that returns a fuzzy truth value when called, all the resources have to return a value of the estimated amount of units available (which will be contrasted with the expected amount to be used). As a result all the actions have to be mapped to functions returning a fuzzy value, which will in turn modulate the intensity of performance of the action (despite it can be simply a 0 or 1 value if no modulation is wanted).

Embedding a sequence of events in an EBN:

As EBN agents are autonomous, and take decisions in a distributed way, a copy of the result of step 2 will be given to each agent susceptible to contribute to the sequence of events. The way to do so is described below.

Trama Events are EBN actions and resources:

To embed a plan or sequence of events such as the one resulting of step 2 in an EBN, is necessary to consider than an event can be executed by an agent, but an event can also be used as the cause or part of the context of another event.

To preserve this duality in an EBN, it is considered that an event is associated to an action and a resource, both as defined in EBN. In addition, if it is an external event, it has to be associated with some estimation method. A class named ActionResource with a data structure similar to next table can therefore be declared.

| **An event forming a story is constituted of:** | |
|---|---|
| name | A string containing the preposition associated with it |
| pos | A fuzzy value storing the possibility value |
| nec | A fuzzy value storing the necessity value |
| context | It corresponds to e*. (An array of pointers to) the ActionResources forming its context |
| cause | It corresponds to e**. (An array of pointers to) the ActionResources that could be its cause |
| causeNeg | A boolean to know if the cause is negated (this will be true when processing NOTP operators) |
| isInternal | A boolean value to store if it is an external or internal event |
| **To relate with the elements of a behavior network it has:** | |
| pAction | (A pointer to) the concrete behavior associated with the action |
| pResource | (A pointer to) the resource associated with the action (when it is seen as part of the cause of some other behavior) |
| pState | (A pointer to) the precondition associated with the action (when it is seen as part of the context of some other behavior) |
| pEstimator | (A pointer to) an estimation method to check if some other agent actually performed the action |

The above table shows the data structure used to process the relations among the events forming a story, where a story is a set of events which within EBN have the properties of actions and of resources. The corresponding object, named ActionResource has the attributes here listed.

To embed this data structure without overwriting the skills previously embedded in the EBN, it will be necessary to update the declaration of the competence module involved in performing an event part of the sequence of events. If it is not declared previously, then a new module will be created. In both cases, the syntax of the module for an action 'a' will look like:

| | | |
|---|---|---|
| 2 | MODULE | |
| | IF a | //this will check the possibility calculated from its context a* |
| 4 | AND ... | //other conditions |
| | THEN a | //this will run the action |
| 6 | EFFECT ... | |
| | USING a 1 | //this will check the necessity from its cause a** |
| 8 | AND ... | //other resources |

*A goal for the sequence of events:*

The actions forming part of a sequence must also be associated with a specific EBN goal. Such a kind of goals are coined ATP goals, standing for Advance the Plot, this is, contribute to make a specific sequence of actions advance.

Given a sequence of events labelled 'S1', it is enough to create a condition named 'ATP_S1' and another one named 'K_S1'. The first stands for the abstract condition of advancing the plot, and the second one for the actual beginning of the sequence.

Then, once receiving the sequence, it is enough to add a new goal that is achieved when the last action of the sequence is performed. In EBN it is declared like:

| | | |
|---|---|---|
| 2 | GOAL K_S1 | //relevance condition |
| | THEN ATP_S1 1.0 | //goal condition |

Then, for all the actions involved in the sequence 'S1', the corresponding EBN module should be updated to look like:

| | | |
|---|---|---|
| 2 | MODULE | |
| | IF .... | //Preconditions |
| 4 | THEN d | //The action to perform |
| | EFFECT | //Whatever effects it already has |
| 6 | AND ATP_S 1 1.0 | //An additional effect and its expected probability |
| | USING ... | //The resources used |

*Who does what?*

Now, consider again the previous example:

Explorer Robot searches the bomb.
IF Explorer Robot localizes the bomb THEN Bomber Robot deactivates the bomb.
Explorer Robot reports progress in the deactivation of the bomb.

It was said previously that the sequence of events described 2 kind of robots, but not 2 particular robots. For example, it is possible to imagine a scenario with lots of tiny robots of 2 kinds. However, to ensure the robots do not overlap in the roles they assume, or than more than 1 robot assumes the same role, it is enough to define a resource that is a role. In the previous example, each event would either have the role 'explorer', or 'bomber'. In this case, the specific module associated with the action would be updated with an additional resource:

| | | |
|---|---|---|
| 2 | MODULE | |
| | IF .... | |
| 4 | THEN d | //The action to perform |
| | EFFECT | |
| 6 | USING ... | |
| | AND r | //The role 'r' associated to action 'd' is an additional resource |

This doesn't exclude the fact that there can be several searching robots. Simply, once all the available role resources are assumed by a certain amounts of robots, there are no resources available anymore and therefore no more robots will assume that role. Therefore, if one only wants 1 robot to assume a particular role, it is enough to say the amount of this role resource is 1. This can be fixed a priori or, if there are some communication skills among the different agents, done dynamically.

*Review of the decisional algorithm:*

Finally, to show all these elements do not introduce any modification in the decisional algorithm, the decisional procedure is reviewed. Note in such decisional procedure there are 2 general assumptions:

- An assumption done by default in an EBN is that the calculation of the values relevant for the decisional mechanism is much faster than the temporal latencies between the actions (at least of the order of 10 to 1).
- For coordination purposes, the assumption that agents can estimate when another agent has performed a particular action is done. This can be done analysing behavioural clues, or simply with communication between the agents.

With these assumptions, for a module k involving a behaviour $b_k$ that is part of one or more sequence of events (the relation with the Trama events is indicated in italics):

1. calculate the activation a and the executability e of the module. The executability is e = $\tau_P$ (Pre, s). *The executability takes into account the possibility value of an event. If the behaviour bk is only involved in the story and has no other precondition, it stands that $\tau_P$ = pos(bk).*
In practical terms, such value is controlled externally: in EBN this is determined when updating the situation of the world s. *Now it also takes into account the context of $b_k$.*
The activation a considers all the goals, their importance, the conflictor and successor modules and computes the maximal expected relevance associated to the action. *If the ATP goal is involved, the effect added to the module which states that it is expected that performing the action will satisfy such ATP condition will be taken into account in this calculation.*
2. calculate the execution-value h(a, e).
3. for each resource res used by module k starting with the previous unavailable resource:

    i. check if the execution value exceeds the activation threshold of the resource res, this is h(a, e) ≥ $\theta_{res}$.
    ii. check if the amount of resource units still available are enough: [$\tau_U \leq \tau_R$(res,s)].
    *This step is the most important, and deserves particular attention:*

- If the resource is the cause of b, which is written b**, the amount available is $\tau_R$ = nec(b**). The amount of resources needed $\tau$R(res,s) will be determined by the method chosen to control the time latencies. For example, if one wants to grant the action is performed in a time interval [$T_{min}$, $T_{max}$] after its cause, it will be used a formula such as:

$$\tau_U\left(res, s\right) = 1 - \frac{t - T'_{min}}{T_{max} - T_{min}}$$

- If the resource is a role resource, it will consider whether the role is available or has been assumed by some other agent.

If all resources are available, bind the resources, i.e., increase the number of used units by the expected number of units the behaviour will use. Here is the only minor modification of the EBN decisional algorithm: Trama events resources are not spendable, and therefore the expected amount of units $\tau$u is not updated: the resources are not bound and can be used to perform another action. This grants parallel branches of a complicated sequence of events can advance in parallel.

4. If both tests succeeded,

    i. Execute the corresponding behaviour
    ii. Reset the activation threshold of all the resources used, i. e., reduce the amount of bound resource

5. Start again.

Finally, note such embodiment does not ruin the properties of EBN: parallel decision process, scalability, and stability. It even conserves the tolerance to noise in the perception and action loops. Finally, just as EBN, it is still compatible with statistical learning, such as reinforcement learning.

Embedding a sequence of events in a biologically plausible neural network:

Despite in the present description how this would work is not review in detail, it is worth stating that a neuron always has inhibitory inputs, excitatory inputs, and a separate output. This is also true of a functional set of neurons such a brain column, or even a large cortical surface in the human brain with a specific function, such as for example V1 in the visual cortex. It is even true for other metabolic processes not involving the nervous system.

For the cases where the output is neurons firing, the lack of inhibitory inputs is what makes the firing of such modules *possible.* The excitatory inputs make the firing *necessary.* The output ratio is related with the intensity of the input, plus additional preconditions related with the metabolic situation.

Therefore, it is possible to map the elements in the Trama model within a biologically plausible neural system in a similar way to how it has been done with a EBN robot. Simply, the context of an event maps to the inhibitory inputs of the module associated with that event, the cause to the excitatory inputs. In this case, the decisional procedure would simply a necessity level beyond the excitability threshold that makes a neural system fire.

It is possible to do the same that was done with an EBN with nervous tissue (or a detailed simulation of such tissue): slightly alter its connectivity in order it contributes to the achievement of a complex sequence of events through sensorimotor loops.

Step 3 in application scenarios:

The main difference between different application scenarios will be how temporal constraints update dynamically the possibility and necessity values associated with the events.

For example, considering an interactive story in which a participant can assume one of the roles, but a virtual character replaces him otherwise. In such case, one would want the system to give the human participant a temporal interval to assume such role and replace him otherwise. The latency cannot be too big or the relation between the different actions will not appear clearly.

In such application scenario, the ideal is to establish the temporal latencies among the events forming such sequences with a method similar to movie editing. Consider a story scene with a structure such as:

a.b.c.

IF x1 THEN y1

IF x2 THEN y2

IF xN THEN yN

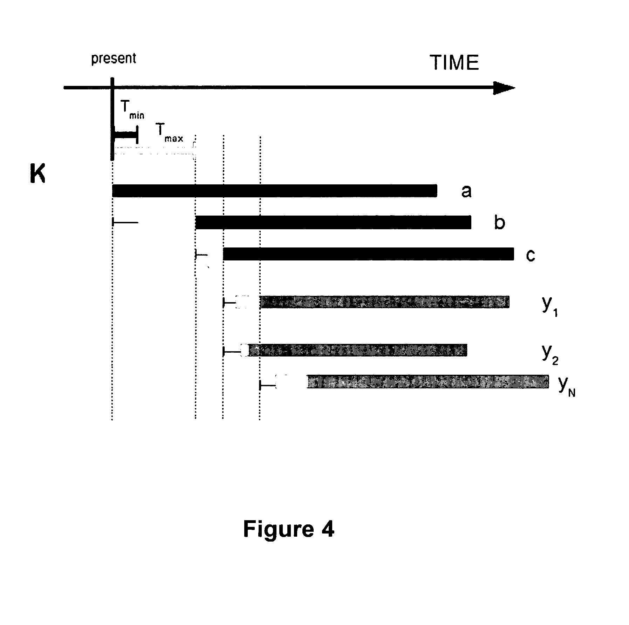

In this case, it would be possible to establish a desired interval of occurrence [Tmin, Tmax] in an application similar to a movie editing software, much in the way transitions between shots are sometimes adjusted. A visual diagram of how this would look for the previous story structure is shown in figure 4.

However, this requirement can be granted quite simply: it is enough that the amount of "cause resource" needed to perform an action satisfies this formula:

$$\tau_U(res, s) = 1 - \frac{t - T'_{min}}{T_{max} - T_{min}}$$

In application scenarios involving the fabrication of products, this would be different. The delays between actions would mainly take into account the time needed to do a previous task. For example, if the process involved some chemical reaction, such a delay could be estimated in real time from a diffusion model taking as input the current temperature and humidity.

For very complex construction schemas, such as a car construction, each sequence of events must be associated to a specific goal. For example, the sequence of events involved in building a wheel must only be executed as far as wheels are needed. This is easy to manage if the goal associated with the sequence is mapped to an actual need. For example, if the sequence labelled 'S23' has as a result building a wheel, the abstract goal and perception 'ATP_ S23' created should be relabelled "assemble a wheel", an related with an estimator of the existing wheels. Using such technique, the different plans would load dynamically as they appear to be needed from the change in the perceived world. Also, having an intuitive labelling will help in the intuitive understanding of the whole network of behaviours of cooperative agents, and help adjusting and debugging such functioning.

However, the method implies, in principle, an arbitrary complexity in the amount of concurrent sequences of events that have to be coordinated, or in the amount of agents involved in carrying out such sequences. Maybe the main limit is set by the amount of perceptions that a situated agent can have, something that will necessarily limit the efficiency on the coordination tasks. Another limit is the amount of time that programming a robotic agent can involve. The use of learning procedures could contribute to this purpose.

A person skilled in the art could introduce changes and modifications in the embodiments described without departing from the scope of the invention as it is defined in the attached claims.

## References

## [0124]

- Dorer, K. 1999. Behavior Networks for Continuous Domains using Situation-Dependent Motivations. Pages 1233 {1238 of: International joint conference on articial intelligence, vol. 16. LAWRENCE ERLBAUM ASSOCIATES LTD.
- Dorer, K. 2004. Extended Behavior Networks for Behavior Selection in Dynamic and Continuous Domains. In: Proceedings of the ecai workshop agents in dynamic domains, u. visser, et al.(hrsg.) Valencia, Spain.
- Dorer, K. 2010. Modeling Human Decision Making Using Extended Behavior Networks. Robocup 2009: Robot soccer world cup xiii, 81-91.
- Johansson, A., & Dell' Acqua, P. 2009. Afective States in Behavior Networks. Intelligent computergraphics 2009, 19-39.
- Maes, P. 1991. The agent network architecture (ANA). Acm sigart bulletin, 2(4), 115-120.

## Claims

1. A method for automated decision making, comprising using one or more situated agents with perceptions and real time reactivity skills for making decisions according to their individual perceptions and motivations, wherein said method is **characterised in that** it further comprises integrating into said situated agents one or more pre-established plans by means of a model representing sequences of causally related events for supporting said decision making to fulfil coordinately said one or more pre-established plans.

2. A method as per claim 1, wherein said model associates a possibility and a necessity value to at least part of said events.

3. A method as per claim 2, comprising building said model, for determining the possibility, necessity and probability of said events, by means of performing the following steps:

   a) stating or discovering events which are internal and/or external to a causal sequence and temporal precedence relations among them;
   b) establishing or discovering relations between the possibility and necessity values of the events from said temporal precedence relations and kinds of events, including if they are internal or external; and
   c) quantifying the temporal latencies within said order relations.

4. A method as per claim 3, wherein:

   - said internal event is one whose occurrence is conditioned by events having started previously within the causal sequence
   - said external event is one that could possibly occur within a sequence of events, and even condition the occurrence of other internal events, but whose possibility of occurrence is not conditioned and must, therefore, be estimated by an external method.

**5.** A method as per claim 4, wherein said statement or discovery of events of step a) comprises stating one or more immediate predecessors for each event, and stating that the start of an event must be posterior to the start of his immediate predecessor or predecessors, and hence state that each event presents order relations forming a lattice with his immediate and non-immediate predecessors.

**6.** A method as per claim 3, wherein said step b) comprises determining the possibility and necessity values of each internal event as a function of:

- its cause, wherein said cause is one preceding event, unique or out of several candidates, regarding possibility and/or necessity values and/or occurrence, and/or
- its context, wherein said context is one or several of the said immediate and non-immediate predecessors.

**7.** A method as per any of claims 3 to 6, comprising updating at run time the possibility and necessity values of each of the events from temporal latencies established beforehand and/or information obtained at run time by a physical model or any other external source.

**8.** A method as per any of claims 3 to 7, comprising transforming the specification of events resulting from steps a), b) and/or c) and integrating it into a physical system constituting one or more said situated agents.

**9.** A method as per claim 8, wherein said physical system is an information processing device selected from one of an electric and/or electronic processor and a biological processing device.

**10.** A method as per claim 9, wherein said electric and/or electronic processor implements simulations of a biological physical system.

**11.** A method as per claim 9, wherein said situated agent make said decisions using said real time reactivity skills according to a behaviour-based network or an extended behaviour-based network, or EBN

**12.** A method as per any of claims 8 to 11, comprising to embed said specification of events into at least part of said situated agents without overwriting the skills previously embedded, informing the situated agent that each event can:

- be executed by any agent with access to the needed resources and/or
- be used as the cause or part of the context of another event and/or
- be estimated with some estimation method

**13.** A method as per any of claims 3 to 12, comprising building candidate sequences of events by performing steps a), b) and/or c) from real time perceptions and/or previously established or declared sequences of events

**14.** A method as per any of claims 8 to 13, comprising integrating statistical learning methods within at least part of said situated agents, for adjusting events relations within sequences of events.

**15.** A method as per claim 13 or 14, comprising ranging and selecting said candidate sequence of events by dynamically evaluating them.

**Figure 1**

**Figure 2**

**Figure 3**

**Figure 4**

**EUROPEAN SEARCH REPORT**

Application Number

EP 11 07 5169

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATTEO BALDONI ET AL: "Programming Rational Agents in a Modal Action Logic", ANNALS OF MATHEMATICS AND ARTIFICIAL INTELLIGENCE, KLUWER ACADEMIC PUBLISHERS, DO, vol. 41, no. 2-4, 1 August 2004 (2004-08-01), pages 207-257, XP019228273, ISSN: 1573-7470, DOI: 10.1023/B:AMAI.0000031196.24935.B5 | 1-10, 13-15 | INV. G06N5/02 |
| Y | * the whole document * | 11 | |
| Y,D | KLAUS DORER ED - JACKY BALTES ET AL: "Modeling Human Decision Making Using Extended Behavior Networks", 18 February 2010 (2010-02-18), ROBOCUP 2009: ROBOT SOCCER WORLD CUP XIII, SPRINGER BERLIN HEIDELBERG, BERLIN, HEIDELBERG, PAGE(S) 81 - 91, XP019138682, ISBN: 978-3-642-11875-3 | 11 | |
| A | * the whole document * | 1-10, 12-15 | TECHNICAL FIELDS SEARCHED (IPC) |
| X | Slawomir Nowaczyk: "Conditional Partial Plans for Rational Situated Agents Capable of Deductive Reasoning and Inductive Learning", PhD thesis department of Computer Science Lund University, Sweden , 31 May 2008 (2008-05-31), XP002666366, Retrieved from the Internet: URL:http://home.agh.edu.pl/~nowaczyk/data/PhDThesis.pdf [retrieved on 2011-12-23] * paragraph [01.7] * * paragraphs [02.2] - [02.3] * | 1-15 | G06N |

-/--

The present search report has been drawn up for all claims

| Place of search | Date of completion of the search | Examiner |
|---|---|---|
| The Hague | 23 December 2011 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 07 5169

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VAHIDOV R ET AL: "Decision station: situating decision support systems", DECISION SUPPORT SYSTEMS, ELSEVIER SCIENCE PUBLISHERS, AMSTERDAM, NL, vol. 38, no. 2, 1 November 2004 (2004-11-01), pages 283-303, XP004549932, ISSN: 0167-9236, DOI: 10.1016/S0167-9236(03)00099-X | 1 | |
| A | * the whole document * | 2-15 | |

TECHNICAL FIELDS
SEARCHED     (IPC)

The present search report has been drawn up for all claims

| Place of search | Date of completion of the search | Examiner |
|---|---|---|
| The Hague | 23 December 2011 | Valencia, Erika |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

........................................................................................

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080208544 A

**Non-patent literature cited in the description**

- Behavior Networks for Continuous Domains using Situation-Dependent Motivations. **DORER, K.** International joint conference on articial intelligence. LAWRENCE ERLBAUM ASSOCIATES LTD, 1999, vol. 16, 1233-1238
- Extended Behavior Networks for Behavior Selection in Dynamic and Continuous Domains. **DORER, K. et al.** Proceedings of the ecai workshop agents in dynamic domains. 2004
- **DORER, K.** Modeling Human Decision Making Using Extended Behavior Networks. *Robocup 2009: Robot soccer world cup,* 2010, vol. xiii, 81-91
- **JOHANSSON, A. ; DELL' ACQUA, P.** Afective States in Behavior Networks. *Intelligent computer-graphics,* 2009, 19-39
- **MAES, P.** The agent network architecture (ANA. *Acm sigart bulletin,* 1991, vol. 2 (4), 115-120